# EUROPÄISCHE PATENTSCHRIFT

(11) **EP 0 903 026 B1**
(45) Veröffentlichungstag und Bekanntmachung des Hinweises auf die Patenterteilung: **13.12.2000**
(21) Anmeldenummer: 97924894.5
(22) Anmeldetag: 16.05.1997
(51) Int. Cl.: H04L 9/08

(54) **Verfahren zur Aushandlung einer Sicherheitspolitik zwischen einer ersten Computereinheit und einer zweiten Computereinheit**
Method for negotiating a security policy between a first and a second computer unit
Procédé de négociation d'une politique de sécurité entre une première et une seconde unité informatique

(30) Priorität: 05.06.1996 DE 19622631
(43) Veröffentlichungstag der Anmeldung: 24.03.1999
(73) Patentinhaber: SIEMENS AKTIENGESELLSCHAFT, 80333 München (DE)
(72) Erfinder: EUCHNER, Martin, D-81737 München (DE); KESSLER, Volker, D-85256 Vierkirchen (DE)
(86) Internationale Anmeldenummer: DE9701002
(87) Internationale Veröffentlichungsnummer: WO9747109

(56) Entgegenhaltungen:
- EP-A- 0 602 335
- DE-A- 3 915 262
- US-A- 5 224 163
- CHORLEY B J ET AL: "The definition and implementation of a secure communications protocol" PROCEEDINGS OF THE INTERNATIONAL CARNAHAN CONFERENCE ON SECURITY TECHNOLOGY, ZURICH, SWITZERLAND, 4-6 OCT. 1983, ISBN 0-89779-057-X, 1983, LEXINGTON, KY, USA, UNIV. KENTUCKY, USA, Seiten 95-102, XP002043057

## Beschreibung

Bei einer Kommunikation zwischen Kommunikationsteilnehmern ist es in vielen technischen Bereichen notwendig, die Kommunikation der Teilnehmer mittels kryptographischer Verfahren gegen jeglichen Mißbrauch abzusichern. Dabei ist der Aufwand, der für eine kryptographische Absicherung der gesamten Kommunikation erforderlich ist, abhängig von der jeweiligen Anwendung. So ist es beispielsweise in Privatgesprächen unter Umständen nicht von sehr großer Bedeutung, daß alle kryptographisch möglichen Sicherheitsmaßnahmen zur Absicherung der Kommunikation getroffen werden. Bei Kommunikation mit sehr vertraulichem Inhalt ist jedoch beispielsweise eine sehr strikte Absicherung der Kommunikation von erheblicher Bedeutung.

Die Auswahl von für die Absicherung der Kommunikation verwendeten Sicherheitsdiensten, Sicherheitsmechanismen, Sicherheitsalgorithmen und Sicherheitsparametern wird als Sicherheitspolitik, die während der Kommunikation zwischen Kommunikationspartnern eingehalten wird, bezeichnet.

Da jedoch das Sicherheitsbedürfnis und damit verbunden die Sicherheitspolitik von Kommunikationssitzung zu Kommunikationssitzung und von Anwendung zu Anwendung unterschiedlich ist und da die Kommunikationsteilnehmer tatsächlich nicht über alle kryptographischen Verfahren verfügen, kann es bei häufig wechselnden Kommunikationspartnern zu schwerwiegenden Diskrepanzen in der erforderlichen bzw. möglichen Sicherheitspolitik kommen, die von der jeweiligen Computereinheit des Kommunikationspartners unterstützt wird und somit gewährleistet werden kann.

Es ist erforderlich, daß in jeder Kommunikationssitzung innerhalb einer Gruppe, die an einer Kommunikationssitzung teilnimmt, eine einheitliche Sicherheitspolitik für die jeweilige Kommunikation festgelegt wird.

Bei einer Vielzahl unterschiedlicher Applikationsprotokolle, welche beispielsweise in dem Dokument [1] beschrieben sind , z. B. CMAP, CDAP, etc., tritt das Problem auf, daß verschiedene Applikationsprotokolle gleicher oder verschiedener Computereinheiten eine unterschiedliche Sicherheitspolitik benötigen. Es werden eventuell auch eigene, für das jeweilige Applikationsprotokoll spezifische kryptographische Schlüssel für eine logische Verbindung des jeweiligen Applikationsprotokolls zwischen zwei Computereinheiten benötigt. Da verschiedene Applikationsprotokolle auf einer Computereinheit implementiert sein können, müssen unter Umständen mehrere kryptographische Schlüssel zwischen zwei Computereinheiten ausgetauscht werden. Auch kann es aus diesem Grund nötig sein, mehrere verschiedene Sicherheitspolitiken zwischen zwei Computereinheiten auszuhandeln.

Ein sicherer Schlüsselaustausch oder eine vertrauenswürdige Aushandlung einer Sicherheitspolitik basiert auf einer gegenseitigen Authentifikation der in die Aushandlung bzw. in den Schlüsselaustausch involvierten Computereinheiten vor dem eigentlichen Schlüsselaustausch bzw. der Aushandlung der Sicherheitspolitik.

Aus [4] ist ein Verfahren zum Austausch eines geheimen Authentifikationsschlüssels zwischen zwei Computereinheiten bekannt.

Bei dem Verfahren aus [4] wird von jeder Computereinheit jeweils ein Authentifikationsschlüssel einer Authentifikationszentrale bekannt gemacht. Dies erfolgt durch Eintragung des Authentifikationsschlüssels in einer öffentlichen Datei durch die Authentifikationszentrale. Aus dem Authentifikationsschlüssel wird von jeder Computereinheit ein gemeinsam authetifizierter Geheimschlüssel gebildet, unter dessen Verwendung Daten verschlüsselt ausgetauscht werden.

Aus [5] ist eine Aushandlung einer Sicherheitspolitik zwischen zwei Computereinheiten bekannt.

Es wird üblicherweise vor jeder Aushandlung einer Sicherheitspolitik bzw. vor jedem Schlüsselaustausch eine Authentifikationsphase durchgeführt, in der die Computereinheiten sich gegenseitig authentifizieren.

Dies führt bei einer Vielzahl von Aushandlungen einer Sicherheitspolitik oder Schlüsselaustauschvorgängen zu einer Vielzahl von durchgeführten Authentifikationen, die einen erhöhten Kommunikationsaufwand und erhöhten Bedarf an Rechenkapazität bedeuten.

Dieses Problem wird noch verschärft, wenn nicht nur zwei Computereinheiten miteinander kommunizieren, sondern wenn mehrere Computereinheiten vorgesehen sind, die verschiedenen Sicherheitsdomänen zugeordnet werden. Unter einer Sicherheitsdomäne ist in diesem Zusammenhang eine Menge von Computereinheiten zu verstehen, die eine gemeinsame Sicherheitspolitik verfolgen.

In diesem Fall wird üblicherweise die Authentifikation auf Basis der Sicherheitsdomänen durchgeführt.

Eine Übersicht über allgemein verwendbare kryptographische Verfahren, die in dem Verfahren eingesetzt werden können, ist beispielsweise in dem Dokument [2] zu finden.

Es ist bekannt, zwischen zwei Kommunikationspartnern eine Sicherheitspolitik auszuhandeln, wobei sich jedoch die in diesem Dokument beschriebene Aushandlung nur auf wenige, zuvor festgelegte Parameter beschränkt ist [3].

Der Erfindung liegt das Problem zugrunde, ein Verfahren zur Aushandlung einer Sicherheitspolitik zwischen zwei Computereinheiten anzugeben, bei dem der benötigte Kommunikationsaufwand und die zur Durchführung des Verfahrens benötigte Rechenkapazität geringer ist als bei bekannten Verfahren.

Das Problem wird durch das Verfahren gemäß Patentanspruch 1 gelöst.

Bei dem Verfahren wird eine Authentifikation zwischen zwei Computereinheiten durchgeführt, in deren Rahmen Authentifikationsreferenzen zwischen den Computereinheiten ausgetauscht werden. Mit den Authentifikationsreferenzen wird eine geheime Information zwischen den Computereinheiten ausgetauscht, anhand derer eine Authentifikation der Computereinheiten möglich ist. Eine anschließende Aushandlung einer Sicherheitspolitik und/oder ein anschließender Schlüsselaustausch zwischen den Computereinheiten erfolgt unter Verwendung der Authentifikationsreferenzen.

Durch dieses Verfahren ist es möglich, explizite Authentifikationsphasen zwischen den Computereinheiten für jeden neuen Schlüsselaustausch und/oder für jede neue Aushandlung einer Sicherheitspolitik zu vermeiden. Dies bedeutet beispielsweise bei einer Vielzahl von eingesetzten Applikationsprotokollen eine erhebliche Reduktion benötigter Authentifikationsphasen, da die Authentifikation nur einmal zwischen den Computereinheiten durchgeführt werden muß und für alle weiteren Schritte die Authentifikation der Computereinheiten implizit anhand der mit übertragenen Authentifikationsreferenzen erfolgt.

Damit wird der für ein Schlüsselmanagement benötigte Kommunikationsaufwand zwischen den Computereinheiten sowie der benötigte Rechenzeitbedarf erheblich reduziert.

Vorteilhafte Weiterbildungen der Erfindung ergeben sich aus den abhängigen Ansprüchen.

Bei Gruppierung einer Vielzahl von Computereinheiten in Sicherheitsdomänen und einer Authentifikation der Computereinheiten auf Basis der Sicherheitsdomäne, der die jeweilige Computereinheit zugeordnet ist, wird eine weitere Einsparung benötigten Kommunikationsaufwands und benötigter Rechenkapazität erreicht. Dies wird durch den modularen Aufbau des Verfahrens erreicht, da nur für jeweils eine Computereinheit einer Sicherheitsdomäne eine explizite Authentifikationsphase durchgeführt werden muß. Werden Aushandlungen einer weiteren Sicherheitspolitik und/oder ein weiterer Schlüsselaustausch zwischen weiteren Computereinheiten der entsprechenden Sicherheitsdomänen, für die schon eine gegenseitige Authentifikation erfolgte, können die ausgetauschten Authentifikationsreferenzen bei der weiteren Aushandlung und/oder dem weiteren Schlüsselaustausch implizit zur Authentifikation der weiteren Computereinheiten eingesetzt werden.

Ferner ist es in einer Weiterbildung des Verfahrens vorteilhaft, Hash-Funktionen zu verwenden, die auf symmetrischen Kryptoalgorithmen basieren, da eine Bildung von Hash-Werten unter Verwendung von solchen Hash-Funktionen sehr schnell durchgeführt werden kann. Damit wird die Durchführung des Verfahrens erheblich beschleunigt.

Durch Verwendung Digitaler Signaturen in dem Verfahren wird eine vertrauenswürdige, nicht abstreitbare Durchführung des Verfahrens möglich.

Weiterhin ist es vorteilhaft, eine Verbindungsabbauphase (Disconnect) durchzuführen, in deren Rahmen geteilte Geheimnisse, beispielsweise der ausgetauschte Schlüssel oder die Authentifikationreferenzen gelöscht werden. Damit wird die Sicherheit des Verfahrens weiter erhöht, da keine ausgetauschten geheimen Informationen für andere Computereinheiten zum eventuellen späteren Mißbrauch zur Verfügung stehen. Die Verbindungsabbauphase dient weiterhin zur Synchronisation der bei der Kommunikation beteiligten Computereinheiten.

In einer Weiterbildung des Verfahrens ist es vorteilhaft, die geheimen Informationen sukzessive zu löschen, so daß eine hierarchische Wiederverwendung geheimer, zuvor ausgetauschter Information z. B. bei weiterem Austausch von Schlüsseln möglich ist. Dies bedeutet beispielsweise, daß zu Beginn der Verbindungsabbauphase der für die logische Verbindung ausgetauschte Sitzungsschlüssel gelöscht wird, die zwischen den Applikationsprotokollen ausgehandelte Sicherheitspolitik noch gespeichert bleibt. Bei einer anschließenden neuen logischen Verbindung zwischen den Applikationsprotokollen der Computereinheiten ist es dann lediglich erforderlich, einen neuen Schlüssel zwischen den Computereinheiten auszutauschen. Die zuvor ausgetauschen geheimen Informationen, beispielsweise die Authentifikationsreferenzen oder die ausgehandelte Sicherheitspolitik kann weiter auch bei der neuen logischen Verbindung wieder verwendet werden.

In den Figuren ist ein Ausführungsbeispiel der Erfindung dargestellt, welches im weiteren näher erläutert wird.

Es zeigen
- Fig. 1: ein Ablaufdiagramm, in dem die einzelnen Verfahrensschritte des Verfahrens dargestellt sind.
- Fig. 2: eine Skizze eines Nachrichtenformats, in dem die bei dem Verfahren ausgetauschten Nachrichten vorteilhaft übertragen werden können.

Im Rahmen dieser Erfindung ist der Begriff des kryptographische Verfahrens in einer Weise zu verstehen, daß sowohl alle kryptographische Verfahren als auch die nichtkryptographische Verfahren zur Integritätsprüfung des Datenpakets DP, beispielsweise der Cyclic-Redundancy Check (CRC) mit dem Begriff kryptographisches Verfahren bezeichnet werden.

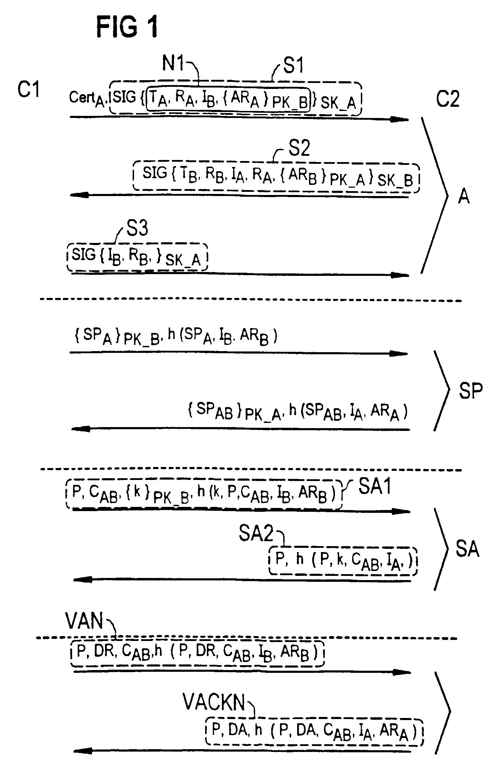

In Figur 1 ist ein Beispiel des Verfahrens dargestellt, anhand dessen die Erfindung dargestellt wird. Wie im weiteren erläutert wird, ist dieses Auführungsbeispiel keinesfalls als ausschließliche Realisierungsmöglichkeit der Erfindung zu verstehen. Varianten des Ausführungsbeispiels in den einzelnen Verfahrensschritten sind für den Fachmann bekannt und werden im Rahmen der weiteren Beschreibung erläutert.

Zu Beginn des Verfahrens wird zwischen einer ersten Computereinheit C1 und einer zweiten Computereinheit C2 eine Authentifikation durchgeführt. Die Authentifikation erfolgt in einer Authentifikationsphase A.

Die Authentifikation kann beispielsweise nach dem in dem X.509-Standard beschriebenen Verfahren zur starken Authentifikation erfolgen. Dies Authentifikation wird dabei beispielsweise auf folgende Weise durchgeführt.

Von der ersten Computereinheit C1 wird ein erstes Zertifikat Cert_{A}, welches einen vertrauenswürdigen, von einer vertrauenswürdigen dritten Instanz, der Zertifizierungseinheit zertifizierten, öffentlichen Schlüssel der ersten Computereinheit C1 enthält, zu einer zweiten Copmutereinheit C2 übertragen.

Ferner wird von der ersten Computereinheit C1 zusätzlich zu dem ersten Zertifikat Cert_{A} eine erste Signaturnachricht S1 gebildet, die durch eine digitale Unterschrift über eine erste Nachricht N1 mit einem geheimen Schlüssel SK_A der ersten Computereinheit C1 gebildet wird.

Die erste Nachricht N1 enthält beispielsweise einen ersten Zeitstempel T_{A}, eine erste Zufallszahl R_{A}, die im Rahmen dieses Verfahrens eindeutig ist, eine Identitätsangabe I_{B} der zweiten Computereinheit C2, bei Verwendung des X.509-Authentifikationsmechanismus beispielsweise die eindeutige Identitätsangabe der zweiten Computereinheit C2, bei einer im weiteren beschriebenen Aushandlung einer zu verwendenden Sicherheispolitik, die sich über eine ganze Sicherheitsdomäne erstreckt, eine Domänenangabe SDID, der die zweite Computereinheit C1 zugeordnet wird, sowie eine mit einem öffentlichen Schlüssel PK_B der zweiten Computereinheit C2 verschlüsselte Authentifikationsreferenz AR_{A} der ersten Computereinheit C1, die einem Pseudoschlüssel der ersten Computereinheit C1 entspricht

Das erste Zertifikat Cert_{A} sowie die erste Signaturnachricht S1 wird an die zweite Computereinheit C2 übertragen.

Nach Auswertung (Verifizierung) der ersten Signaturnachricht S1, welche zur Abwehr von kryptographischen Angriffen unterschiedlicher Art dient, wird in der zweiten Computereinheit C2 eine zweite Signaturnachricht S2 gebildet und an die erste Computereinheit C1 übertragen.

Die zweite Signaturnachricht S2 enthält beispielsweise folgende Komponenten:
- einen zweiten Zeitstempel T_{B},
- eine zweite, eindeutige Zufallszahl R_{B},
- eine Identitätsangabe I_{A} der ersten Computereinheit C1,
- die erste Zufallszahl R_{A},
- eine mit einem öffentlichen Schlüssel PK_A der ersten Computereinheit C1 verschlüsselte Authentifikationsreferenz AR_{B} der zweiten Computereinheit C2.

Die oben beschriebenen Komponenten bilden eine zweite Nachricht N2, die durch Bildung einer digitalen Unterschrift unter Verwendung eines geheimen Schlüssels SK_B der zweiten Computereinheit C2 bestimmt wird.

Die geheimen Pseudoschlüssel in Funktion der Authentifikationsreferenz AR_{A} der ersten Computereinheit C1 und der Authentifikationsreferenz AR_{B} der zweiten Computereinheit C2 dienen im weiteren Protokollablauf dazu, nachfolgende Protokollphasen und Protokollnachrichten kryptographisch an die Authentifikationsphase zu koppeln. Bei Verwendung des X.509-Standards kann die Authentifikationsreferenz AR_{A} der ersten Computereinheit C1 in einem Feld übertragen werden, das für einen "geheimen Bit-String" vorgesehen ist.

Nach Empfang und Auswertung, d. h. Verifizierung der zweiten Signaturnachricht S2 in der ersten Computereinheit C1 wird von der ersten Computereinheit C1 eine dritte Signaturnachricht S3 gebildet und an die zweite Computereinheit C2 übertragen.

Die dritte Signaturnachricht S3 wird gebildet unter Verwendung des geheimen Schlüssels SK_A der ersten Computereinheit C1, mit dem eine dritte Nachricht N3 verschlüsselt wird. Die dritte Nachricht N3 enthält mindestens die Identitätsangabe I_{B} der zweiten Computereinheit C2 sowie die zweite Zufallszahl R_{B}.

Die Authentifikation kann jedoch durch jede andere Authentifikation zwischen der ersten Computereinheit C1 und der zweiten Computereinheit C2 erfolgen, beispielsweise unter Verwendung des Prinzips des exponentiellen Schlüsselaustauschs, z. B. unter Verwendung des sog. Diffie-Hellmann-Verfahrens. Bei Verwendung des Diffie-Hellmann-Schlüsselaustauschs wird der ausgetauschte Schlüssel direkt als die im weiteren Verfahren verwendete Authentifikationsreferenzen AR_{A}, AR_{B} verwendet.

In der Authentifikationsphase A ist es lediglich erforderlich, daß zwischen der ersten Computereinheit C1 und der zweiten Computereinheit C2 die Authentifikationsreferenzen AR_{A}, AR_{B} in vertrauenswürdiger Weise ausgetauscht werden. Dies bedeutet, daß es nur erforderlich ist, daß in den beiden Computereinheiten C1, C2 eine für die jeweilige Computereinheit C1, C2 charakteristische geheime Information in der jeweiligen anderen Computereinheit C1, C2 nach der Authentifikationsphase A vorliegt.

Nach erfolgter Authentifikation wird zwischen der ersten Computereinheit C1 und der zweiten Computereinheit C2 eine in der weiteren Kommunikationsphase eingesetzte Sicherheitspolitik ausgehandelt und/oder es wird ein kryptographische Schlüssel ausgetauscht.

Im weiteren werden sowohl eine Aushandlungsphase SP der Sicherheitspolitik als auch eine Schlüselaustauschphase SA detatilliert erläutert. Es ist jedoch in Varianten des Verfahren vorgesehen, nur die Aushandlungsphase SP der Sicherheitspolitik oder die Schlüselaustauschphase SA durchzuführen. Die gemeinsame Darstellung beider Phasen SP, SA in dem Ausführungsbeispiel dient lediglich der deutlicheren Darstellung der Erfindung.

Die Aushandlungsphase SP der Sicherheitspolitik kann beispielsweise durch folgende Verfahrensschritte charakterisiert sein.

Mit diesem modular aufgebauten Protokoll wird eine gegenseitige Authentifikation der ersten Computereinheit C1 und der zweiten Computereinheit C2 für weitere Aushandlungen der Sicherheitspolitik zwischen der ersten Computereinheit C1 und der zweiten Computereinheit C2 möglich, ohne daß die Authentifikationsphase A erneut durchführen zu müssen. Dies wird durch Verwendung der Authentifikationsreferenzen AR_{A}, AR_{B} in der Aushandlungsphase SP der Sicherheitspolitik zur impliziten Authentifikation der Computereinheiten C1, C2 möglich.

Die Sicherheitspolitik kann sich in einer Weiterbildung beispielsweise über ganze Sicherheitsdomänen S1, S2 erstrecken, womit eine Gruppe von Rechnern bezeichnet wird, die sich einer gemeinsamen Sicherheitspolitik unterordnen.

Die Sicherheitspolitik kann sich jedoch auch nur auf die aktuell aufzubauende Verbindung zwischen der ersten Computereinheit C1 und der zweiten Computereinheit C2 erstrecken.

Es wird ein Sicherheitspolitikvorschlag SP_{A}, der die zu verwendende Sicherheitspolitik, die von der ersten Computereinheit C1 vorgeschlagen wird, enthält, in der ersten Computereinheit C1 gebildet.

Der Sicherheitspolitikvorschlag SP_{A} wird mit dem öffentlichen Schlüssel PK_B der zweiten Computereinheit C2 verschlüsselt, wodurch der sensitive Sicherheitspolitikvorschlag SP_{A} vor einem unbefugten Abhören geschützt wird.

Ferner wird mindestens auf den Sicherheitspolitikvorschlag SP_{A}, die Identitätsangabe I_{B} der zweiten Computereinheit C2 sowie die Authentifikationsreferenz AR_{B} der zweiten Computereinheit C2 eine Hash-Funktion h(.) angewendet wird, mit der ein erster Hash-Wert h(SP_{A}, I_{B}, AR_{B}) gebildet wird.

Mit dem ersten Hash-Wert h(SP_{A}, I_{B}, AR_{B}) wird die Authentizität der ersten Computereinheit C1 sowie des Sicherheitspolitikvorschlags SP_{A} gewährleistet für die zweite Computereinheit C2.

Es ist an dieser Stelle möglich ist, eine asymmetrische digitale Unterschrift zu verwenden, wodurch eine Nichtabstreitbarkeit der jeweils digital signierten Nachricht erreicht wird.

Die Bildung eines Hash-Wertes auf Basis symmetrischer Kryptoverfahren weist den Vorteil auf, daß die Ermittlung des Hash-Wertes mittels symmetrischer Kryptoverfahren erheblich schneller durchgeführt werden kann als die Bildung einer digitalen Unterschrift.

Es können beliebige Hash-Funktionen im Rahmen dieses Verfahrens eingesetzt werden, beispielsweise das MD4-Verfahren, das MD5-Verfahren, oder der Hash-Algorithmus ISO10118. Das Hash-Verfahren ISO10118 ist besonders vorteilhaft einsetzbar für den Fall, wenn eine Hardwareimplimentierung des symmetrischen sog. DES-Verschlüsselungsverfahrens (Data Encryption Standard) vorhanden ist.

Der verschlüsselte Sicherheitspolitikvorschlag SP_{A} sowie der erste Wert h(SP_{A}, I_{B}, AR_{B}) werden zu der zweiten Computereinheit C2 übertragen und dort verifiziert.

Als Antwort wird eine Sicherheitspolitikbestätigung SP_{AB} zu der ersten Computereinheit C1 übertragen, die mit dem öffentlichen Schlüssel PK_A der ersten Computereinheit C1 verschlüsselt wird. Ferner wird ein zweiter Hash-Wert h(SP_{AB}, I_{A}, AR_{A}) in der zweiten Computereinheit C2 gebildet und zu der ersten Computereinheit C1 übertragen, wobei der zweite Hash-Wert h(SP_{AB}, I_{A}, AR_{A}) mindestens über die Sicherheitspolitikbestätigung SP_{AB}, die Identitätsangabe I_{A} der ersten Computereinheit C1 sowie die Authentifikationsreferenz AR_{A} der ersten Computereinheit C1 gebildet wird.

Die Sicherheitspolitikbestätigung SP_{AB} enthält beispielsweise entweder eine Bestätigung der Akzeptanz des von der ersten Computereinheit C1 gesendeten Sicherheitspolitikvorschlags SP_{A}, oder aber einen eigenen, von der zweiten Computereinheit C2 gebildeten Sicherheitspolitikvorschlag. Weicht der von der zweiten Computereinheit C2 gebildete Sicherheitspolitikvorschlag von dem Sicherheitspolitikvorschlag SP_{A} der ersten Computereinheit C1 ab, so muß auf entsprechende Weise die erste Computereinheit C1 den weiteren Sicherheitspolitikvorschlag verarbeiten, verifizieren, überprüfen und eine weitere Sicherheitspolitikbestätigung zu der zweiten Computereinheit C2 senden.

Die Inhalte der Nachrichten sind entsprechend dem oben beschriebenen Verfahren. Die Aushandlungsphase SP der Sicherheitspolitik kann iterativ solange weitergeführt werden, bis sich die erste Computereinheit C1 und die zweite Computereinheit C2 auf eine einheitliche, von beiden Computereinheiten C1, C2 unterstützte Sicherheitspolitik "geeinigt" haben.

Die Schlüselaustauschphase SA kann beispielsweise durch folgende Verfahrensschritte realisiert werden.

Von der ersten Computereinheit C1 wird eine erste Schlüsselaustauschnachricht SA1 zu der zweiten Computereinheit C2 übertragen.

Die erste Schlüsselaustauschnachricht SA1 enthält beispielsweise folgende Komponenten:
- eine Angabe P einer zu verwendenden Verbindung, mit der eine von mehreren verschiedenen gleichzeitig aktiven Verbindungen repräsentiert wird,
- einen Zählwert C_{AB} der ersten Computereinheit C1 für die Schlüsselverteilung und/oder eine Verbindungsabbruchsnachricht,
- einen mit dem öffentlichen Schlüssel PK_B der zweiten Computereinheit C2 verschlüsselten, im weiteren Verfahren zu verwendenden Sitzungsschlüssel k, wobei der Sitzungsschlüssel k vorteilhafterweise ein symmetrischer Sitzungsschlüssel ist, der im Rahmen der Verbindung P eingesetzt wird,
- ein dritter Hash-Wert h(k, P, C_{AB}, I_{B}, AR_{B}), der gebildet wird mindestens über den Sitzungsschlüssel k, die Verbindung P, den Zählwert C_{AB}, die Identitätsangabe I_{B} der zweiten Computereinheit C2 sowie die Authentifikationsreferenz AR_{B} der zweiten Computereinheit C2.

Es ist in einer Weiterbildung des Verfahrens ebenfalls vorgesehen, daß der Sitzungsschlüssel k ein asymmetrisches Schlüsselpaar ist.

Der Zählwert C_{AB} zwischen der ersten Computereinheit C1 und der zweiten Computereinheit C2 dient dazu, zwischen verschiedenen Protokolldurchläufen für die gleiche Verbindung P zwischen der ersten Computereinheit C1 und der zweiten Computereinheit C2 zu unterscheiden. Indem der jeweils empfangene Zählwert C_{AB} stets größer sein muß als der zuletzt gespeicherte Zählwert C_{AB}, können Replay-Attacken, d. h. Angriffe durch Wiedereinspielung abgehörter Daten, entdeckt werden.

Die erste Schlüssselaustauschnachricht SA1 wird von der zweiten Computereinheit C2 anhand des dritten Hash-Wertes h(k, P, C_{AB}, I_{B}, AR_{B}) verifiziert, der Sitzungsschlüssel k wird unter Verwendung des geheimen Schlüssels SK_B der zweiten Computereinheit C2 entschlüsselt, und es wird eine zweite Schlüsselaustauschnachricht SA2 gebildet, mit der der Empfang und die weitere Verwendung des Sitzungschlüssels k für die Verbindung P der ersten Computereinheit C1 bestätigt wird.

Die zweite Schlüsselaustauschnachricht SA2 enthält beispielsweise folgende Komponenten:
- die Verbindung P,
- einen vierten Hash-Wert h(P, k, C_{A}, I_{A}), der gebildet wird mindestens über die Verbindung P, den Sitzungsschlüssel k, den ersten Zählwert C_{A} , sowie die Identitätsangabe I_{A} der ersten Computereinheit C1.

Auf diese Weise ist es möglich, auf einfache Art schnell und verläßlich in dem Verfahren zu verwendende Sitzungsschlüssel zwischen der ersten Computereinheit Cl und der zweiten Computereinheit C2 auszutauschen, ohne die gegenseitige Authentifikationsphase und die Aushandlung der Sicherheitspolitik SP wiederholen zu müssen.

Dies ist nur augrund des modularen Aufbaus des oben beschriebenen Verfahrens möglich, da bei dem modularen Aufbau einzelne Phasen des Verfahrens weggelassen oder in beliebiger Weise miteinander kombiniert werden können.

Ferner ist es in einer Weiterbildung vorgesehen, einen Verbindungsabbruch auch auf eine kryptographische Weise abzusichern. Dies kann beispielsweise dadurch erfolgen, daß von der ersten Computereinheit C1 eine Verbindungsabbruchsnachricht VAN gebildet wird und an die zweite Computereinheit C2 gesendet wird.

Die Verbindungsabbruchsnachricht VAN enthält beispielsweise folgende Komponenten:
- die Verbindung P,
- eine Angabe zur Identifizierung der Verbindungsabbruchsnachricht VAN,
- den Zählwert C_{AB},
- einen fünften Hash-Wert h(P, DR, C_{AB}, I_{B}, AR_{B}), der beispielsweise über die Verbindung P, die Angabe DR der Verbindungsabbruchsnachricht VAN, den Zählwert C_{AB}, die Identitätsangabe I_{B} der zweiten Computereinheit C2, und die Authentifikationsreferenz AR_{B} der zweiten Computereinheit C2 gebildet wird.

Die Verbindungsabbruchsnachricht VAN wird von der zweiten Computereinheit C2 verifiziert, die Verbindung wird abgebrochen, und es wird eine beispielsweise Verbindungsabbruchbestätigungsnachricht VACKN in der zweiten Computereinheit C2 gebildet und an die erste Computereinheit C1 übertragen.

Die Verbindungsabbruchbestätigungsnachricht VACKN enthält beispielsweise folgende Komponenten:
- die Verbindung P,
- eine Angabe DA zur Identifizierung der Verbindungsabbruchbestätigungsnachricht VACKN,
- einen sechsten Hash-Wert h(P, DA, C_{AB}, I_{A}, AR_{A}), der beispielsweise über die Verbindung P, die Angabe DA zur Identifizierung der Verbindungsabbruchbestätigungsnachricht VACKN, den Zählwert C_{AB}, die Identitätsangabe I_{A} der ersten Computereinheit C1, sowie die Authentifikationsreferenz AR_{A} der ersten Computereinheit C1 gebildet wird.

Mit den Angaben DR, DA zur Identifizierung der Verbindungsabbruchsnachricht VAN bzw. der Verbindungsabbruchbestätigungsnachricht VACKN ist es möglich, Mißbrauch der Hash-Werte bei zukünftigen Erweiterungen dieser oben beschriebenen Verfahren für andere Zwecke zu verhindern. Die Verbindungsabbruchsnachricht VAN und/oder die Verbindungsabbruchbestätigungsnachricht VACKN enthalten zusätzlich die Angabe über die verwendete Verbindung P.

Die oben beschriebenen und in Fig. 1 dargestellten Phasen des Verfahrens zur Authentifizierung A, zur Aushandlung SP der Sicherheitspolitikvorschlag, zum Schlüsselaustausch SA, sowie zum Verbindungsabbruch können in beliebiger Kombination miteinander durchgeführt werden.

Es ist in einer Weiterbildung des Verfahrens vorgesehen, daß in der Verbindungsabbruchphase nicht alle geheimen ausgetauschten Informationen sofort gelöscht werden, sondern daß zuerst nur der jeweils ausgetauschte Sitzungsschlüssel k gelöscht wird und beispielsweise die ausgehandelte Sicherheitspolitik und/oder die Authentifikationsreferenzen AR_{A}, AR_{B} in den Computereinheiten C1, C2 gespeichert bleiben.

Ferner ist es in einer Weiterbildung vorgesehen, die Löschung der geteilten geheimen Informationen sukzessive zu löschen, d. h. nach Löschen des Sitzungsschlüssels k zuerst die jeweils ausgehandelte Sicherheitspolitik zu löschen und erst anschließend die Authentifikationsreferenzen AR_{A}, AR_{B}.

Das Verfahren kann während einer Verbindungsaufbauphase bzw. während einer Verbindungsaufbauphase einer Verbindung zwischen der ersten Computereinheit C1 und der zweiten Computereinheit C2 durchgeführt werden.

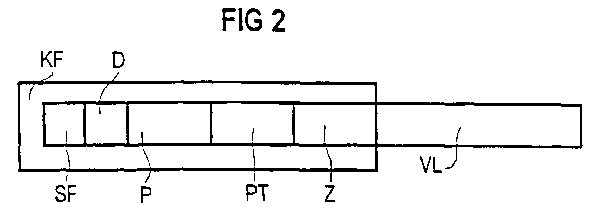

In einer Weiterbildung des Verfahrens ist es vorgesehen, die einzelnen Nachrichten in einem Nachrichtenformat zu übertragen, dessen Aufbau in Figur 2 dargestellt ist.

Bei diesem Nachrichtenformat wird den jeweils zu übertragenden Nachrichten ein Kopffeld KF vorangestellt.

Das im weiteren beschriebene Nachrichtenformat ist in keinster Weise auf das im vorigen beschriebene Verfahren beschränkt, sondern kann in allen kryptographischen Protokollen verwendet werden.

Das Kopffeld KF weist vorzugsweise folgende Elemente auf:
- ein Sicherheits-Flag SF (Security-Flag) der Länge mindestens eines Bits,
- die Verbindung P,
- eine Phasenangabe PT einer Phase A, SP, SA, auf die sich die jeweilige Information der Nachricht bezieht,
- ein Zählerfeld Z, mit dem die Nachricht jeweils innerhalb der jeweiligen Phase A, SP, SA eindeutig identifiziert wird,
- eine Angabe D, beispielsweise eine Adresse, der die Nachricht empfangenden Computereinheit C1, C2 und/oder einer Angabe der Sicherheitsdomäne S1, S2, der die jeweilige Computereinheit C1, C2 zugeordnet ist.

Weiterhin können in dem Kopffeld KF in einer Weiterbildung auch beispielsweise in dem Feld PT, in dem die jeweilige Phase A, SP, SA angegeben wird, zusätzlich mindestens eine Angabe über in der Phase A, SP, SA zu verwendende Algorithmen, beispielsweise RSA, MD5, MD4, DES, Elliptische Kurve-Algorithmen und/oder in den Algorithmen zu verwendende Parameter enthalten sein.

Durch das Sicherheits-Flag SF, welches die Länge mindestens eines Bits aufweist, wird es für den Empfänger bei der Auswertung des Kopffeldes KF auf sehr einfache, schnelle und somit Rechenkapazität einsparende Weise möglich, zu erkennen, ob die jeweils empfangene Nachricht in irgendeiner Weise kryptographisch behandelt ist.

Hierzu reicht die Angabe in dem Sicherheits-Flag SF mit einem ersten logischen Wert für eine kryptographisch bearbeitete Nachricht und einen zweiten logischen Wert für eine kryptographisch nicht bearbeitete Nachricht aus.

Aus diesem Grund ist es in einer Weiterbildung vorgesehen, daß das Sicherheits-Flag SF nur die Länge genau eines Bits aufweist.

Ein Vorteil des Zählerfeldes Z ist darin zu sehen, daß in einer Phase A, SP, SA prinzipiell beliebig viele Nachrichten ausgetauscht werden können und die jeweilige Nachricht innerhalb der Phase A, SP, SA mittels des Zählerfeldes Z eindeutig identifiziert werden kann.

Ein Vorteil der Phasenangabe PT der Phase A, SP, SA in dem Kopffeld KF ist in der sehr einfachen Erweiterbarkeit des gesamten Verfahrens um neue Phasen zu sehen, wobei lediglich eine neue Kennzeichnung in die Phasenangabe PT aufgenommen werden muß. Auch ist es mit der Phasenangabe PT ebenso einfach möglich, schon vorgesehene Phasen zu ersetzen und/oder zu löschen.

Die Nachricht selbst ist in einem Feld VL variabler Länge enthalten.

In diesem Dokument wurden folgende Veröffentlichungen zitiert:
[1] MMC-Übersichtsartikel
[2] S. Muftic, Sicherheitsmechanismen für Rechnernetze, Carl Hanser Verlag, München, ISBN 3-446-16272-0, S. 34 - 70, 1992
[3] E. Kipp et al, The SSL Protocol, Internet Draft, Erhältlich im Juni 1995 im Internet unter folgender Adresse:
   gopher://ds.internic.net:70/00/internet-drafts/ draft-hickman-netscape-ss1-01.txt
[4] DE-A-3 915 262
[5] Chorley B. J. et al., "The definition and implementation of a secure communications protocol", Proceedings International Carnahan Conference on Security Technology, Seite 95-102, 4.-6. Oktober, 1983, Zürich (CH)

## Patentansprüche

1. Verfahren zur Aushandlung einer Sicherheitspolitik zwischen einer ersten Computereinheit (C1) und einer zweiten Computereinheit (C2),
- bei dem zwischen der ersten Computereinheit (C1) und der zweiten Computereinheit (C2) eine Authentifikation durchgeführt wird, **dadurch gekennzeichnet**, daß
- während der Authentifikation zwischen der ersten Computereinheit (C1) und der zweiten Computereinheit (C2) Authentifikationsreferenzen (AR_{A}, AR_{B}) ausgetauscht werden, welche jeweils charakteristische geheime Informationen umfassen, welche zwischen der ersten Computereinheit (C1) und der zweiten Computereinheit (C2) ausgetauscht werden und anschließend in der jeweiligen anderen Computereinheit vorliegen, und mit denen die Authentizität der Computereinheiten (C1, C2) gewährleistet wird, und
- zwischen der ersten Computereinheit (C1) und der zweiten Computereinheit (C2) die Sicherheitspolitik (SP) ausgehandelt wird, wobei mindestens eine der Authentifikationsreferenzen (AR_{A}, AR_{B}) verwendet wird.

2. Verfahren nach Anspruch 1,
- bei dem zwischen der ersten Computereinheit (C1) und der zweiten Computereinheit (C2) ein Schlüsselaustausch (SA) durchgeführt wird, und
- bei dem bei dem Schlüsselaustausch (SA) mindestens eine der Authentifikationsreferenzen (AR_{A}, AR_{B}) verwendet wird.

3. Verfahren nach Anspruch 1 oder 2,
- bei dem die erste Computereinheit (C1) einer ersten Sicherheitsdomäne (S1) zugeordnet ist,
- bei dem die zweite Computereinheit (C2) einer zweiten Sicherheitsdomäne (S2) zugeordnet ist,
- bei dem von weiteren Computereinheiten (Ci) der ersten Sicherheitsdomäne (S1) oder der zweiten Sicherheitsdomäne (S2) eine weitere Sicherheitspolitik (Spi) ausgehandelt wird, und
- bei dem bei der Aushandlung die Authentifikationsreferenzen (AR_{A}, AR_{B}) verwendet werden.

4. Verfahren nach einem der Ansprüche 1 bis 3,
- bei dem die erste Computereinheit (C1) einer ersten Sicherheitsdomäne (S1) zugeordnet ist,
- bei dem die zweite Computereinheit (C2) einer zweiten Sicherheitsdomäne (S2) zugeordnet ist,
- bei dem von weiteren Computereinheiten (Ci) der ersten Sicherheitsdomäne (S1) oder der zweiten Sicherheitsdomäne (S2) ein weiterer Schlüsselaustausch (SAi) durchgeführt wird, und
- bei dem bei dem Schlüsselaustausch (SAi) die Authentifikationsreferenzen (AR_{A}, AR_{B}) verwendet werden.

5. Verfahren nach einem der Ansprüche 1 bis 4,
bei dem im Rahmen des Verfahrens Hash-Funktionen (h()) verwendet werden, die auf symmetrischen Kryptoalgorithmen basieren.

6. Verfahren nach einem der Ansprüche 1 bis 5,
bei dem im Rahmen des Verfahrens Digitale Signaturen (SIG()) verwendet werden.

7. Verfahren nach einem der Ansprüche 1 bis 6,
bei dem die Authentifikation nach einem Verfahren gemäß der starken Authentifikation des X.509-Verfahrens durchgeführt wird.

8. Verfahren nach einem der Ansprüche 1 bis 7,
- bei dem die Authentifikation nach einem Verfahren gemäß dem Diffie-Hellman-Verfahren zum Schlüsselaustausch durchgeführt, und
- bei dem die nach dem Diffie-Hellman-Verfahren ausgetauschten Schlüssel als Authentifikationsreferenzen (AR_{A}, AR_{B}) verwendet werden.

9. Verfahren nach einem der Ansprüche 1 bis 8,
bei dem eine Verbindungsabbauphase (Disconnect) durchgeführt wird, in deren Rahmen geteilte Geheimnisse, beispielsweise der ausgetauschte Schlüssel oder die Authentifikationsreferenzen (AR_{A}, AR_{B}), gelöscht werden.

10. Verfahren nach Anspruch 9,
bei dem der ausgetauschte Schlüssel und die Authentifikationsreferenzen (AR_{A}, AR_{B}) gelöscht werden.

11. Verfahren nach Anspruch 10,
bei dem anschließend sukzessive weitere Geheimnisse gelöscht werden.

## Claims

1. Method for negotiating a security policy between a first computer unit (C1) and a second computer unit (C2),
- in which authentication is carried out between the first computer unit (C1) and the second computer unit (C2), characterized in that
- during the authentication between the first computer unit (C1) and the second computer unit (C2), authentication references (AR_{A}, AR_{B}) are exchanged which each comprise characteristic secret information which is exchanged between the first computer unit (C1) and the second computer unit (C2) and is subsequently available in the respective other computer unit and is used to assure the authenticity of the computer units (C1 and C2), and
- the security policy (SP) is negotiated between the first computer unit (C1) and the second computer unit (C2) using at least one of the authentication references (AR_{A}, AR_{B}).

2. Method according to Claim 1,
- in which key exchange (SA) takes place between the first computer unit (C1) and the second computer unit (C2), and
- in which at least one of the authentication references (AR_{A}, AR_{B}) is used for the key exchange (SA).

3. Method according to Claim 1 or 2,
- in which the first computer unit (C1) is assigned to a first security domain (S1),
- in which the second computer unit (C2) is assigned to a second security domain (S2),
- in which a further security policy (Spi) is negotiated by further computer units (Ci) in the first security domain (S1) or in the second security domain (S2), and
- in which the authentication references (AR_{A}, AR_{B}) are used for the negotiation.

4. Method according to one of Claims 1 to 3,
- in which the first computer unit (C1) is assigned to a first security domain (S1),
- in which the second computer unit (C2) is assigned to a second security domain (S2),
- in which further key exchange (Sai) is carried out by further computer units (Ci) in the first security domain (S1) or in the second security domain (S2), and
- in which the authentication references (AR_{A}, AR_{B}) are used for the key exchange (SAi).

5. Method according to one of Claims 1 to 4, in which hash functions (h()) based on symmetrical cryptoalgorithms are used as part of the method.

6. Method according to one of Claims 1 to 5, in which digital signatures (SIG()) are used as part of the method.

7. Method according to one of Claims 1 to 6, in which the authentication is carried out using a method based on the powerful authentication of the X.509 method.

8. Method according to one of Claims 1 to 7,
- in which the authentication is carried out using a method based on the Diffie-Hellman method of key exchange, and
- in which the keys exchanged using the Diffie-Hellman method are used as authentication references (AR_{A}, AR_{B}).

9. Method according to one of Claims 1 to 8,
in which a disconnect phase is carried out during which shared secrets, for example the exchanged key or the authentication references (AR_{A}, AR_{B}), are erased.

10. Method according to Claim 9,
in which the exchanged key and the authentication references (AR_{A}, AR_{B}) are erased.

11. Method according to Claim 10,
in which further secrets are subsequently gradually erased.

## Revendications

1. Procédé de négociation d'une politique de sécurité entre une première unité informatique (C1) et une deuxième unité informatique (C2),
- dans lequel une authentification est exécutée entre la première unité informatique (C1) et la deuxième unité informatique (C2),
caractérisé en ce que
- pendant l'authentification entre la première unité informatique (C1) et la deuxième unité informatique (C2), des références d'authentification (AR_{A}, AR_{B}) sont échangées et comportent chacune des informations secrètes caractéristiques qui sont échangées entre la première unité informatique (C1) et la deuxième unité informatique (C2), et qui sont ensuite présentes dans chaque autre unité informatique, et par lesquelles l'authenticité des unités informatiques (C1, C2) est garantie, et
- la politique de sécurité (SP) est négociée entre la première unité informatique (C1) et la deuxième unité informatique (C2), au moins l'une des références d'authentification (AR_{A}, AR_{B}) étant utilisée.

2. Procédé selon la revendication 1,
- dans lequel un échange de clé (SA) est exécuté entre la première unité informatique (C1) et la deuxième unité informatique (C2), et
- dans lequel, lors de l'échange de clé (SA), au moins l'une des références d'authentification (AR_{A}, AR_{B}) est utilisée.

3. Procédé selon la revendication 1 ou 2,
- dans lequel la première unité informatique (C1) est associée à un premier domaine de sécurité (S1),
- dans lequel la deuxième unité informatique (C2) est associée à un deuxième domaine de sécurité (S2),
- dans lequel une autre politique de sécurité (SPi) est négociée par d'autres unités informatiques (Ci) du premier domaine de sécurité (S1) ou du deuxième domaine de sécurité (S2), et
- dans lequel les références d'authentification (AR_{A}, AR_{B}) sont utilisées dans la négociation.

4. Procédé selon l'une des revendications 1 à 3,
- dans lequel la première unité informatique (C1) est associée à un premier domaine de sécurité (S1),
- dans lequel la deuxième unité informatique (C2) est associée à un deuxième domaine de sécurité (S2),
- dans lequel un autre échange de clé (SAi) est exécuté par d'autres unités informatiques (Ci) du premier domaine de sécurité (S1) ou du deuxième domaine de sécurité (S2), et
- dans lequel les références d'authentification (AR_{A}, AR_{B}) sont utilisées dans l'échange de clé (SAi).

5. Procédé selon l'une des revendications 1 à 4,
dans lequel, dans le cadre du procédé, on utilise des fonctions de Hash (h()) qui sont basées sur des algorithmes de cryptage symétriques.

6. Procédé selon l'une des revendications 1 à 5,
dans lequel des signatures numériques (SIG()) sont utilisées dans le cadre du procédé.

7. Procédé selon l'une des revendications 1 à 6,
dans lequel l'authentification est effectuée selon un procédé d'après l'authentification forte du procédé X.509.

8. Procédé selon l'une des revendications 1 à 7,
dans lequel l'authentification est effectuée selon un procédé de Diffie-Hellmann d'échange de clé, et
dans lequel les clés échangées selon le procédé de Diffie-Hellmann sont utilisées comme référence d'authentification (AR_{A}, AR_{B}).

9. Procédé selon l'une des revendications 1 à 8,
dans lequel une phase de coupure de la liaison (déconnexion) est exécutée, dans le cadre de laquelle des secrets partagés, par exemple la clé échangée ou les références d'authentification (AR_{A}, AR_{B}), sont effacées.

10. Procédé selon la revendication 9,
dans lequel la clé échangée et les références d'authentification (AR_{A}, AR_{B}) sont effacées.

11. Procédé selon la revendication 10,
dans lequel d'autres secrets successifs sont ensuite effacés.
